(19) Europäisches Patentamt
European Patent Office
Office européen des brevets

(11) Publication number: **0 231 309 B1**

(12) # EUROPEAN PATENT SPECIFICATION

(45) Date of publication of patent specification: **06.04.94**

(51) Int. Cl.⁵: **H01B 1/12**, C08G 75/06, C08F 8/06

(21) Application number: **86904829.8**

(22) Date of filing: **15.07.86**

(86) International application number:
**PCT/FI86/00083**

(87) International publication number:
**WO 87/00677 (29.01.87 87/03)**

The file contains technical information submitted after the application was filed and not included in this specification

(54) **PROCESS FOR MANUFACTURING ELECTRICALLY CONDUCTIVE POLYTHIOPHENE.**

(30) Priority: **24.07.85 FI 852883**

(43) Date of publication of application:
**12.08.87 Bulletin 87/33**

(45) Publication of the grant of the patent:
**06.04.94 Bulletin 94/14**

(84) Designated Contracting States:
**BE CH DE FR GB IT LI NL SE**

(56) References cited:
**EP-A- 0 083 059** **EP-A- 0 131 189**
**EP-A- 0 145 843** **EP-A- 0 195 380**
**EP-A- 0 195 381** **WO-A-85/05728**
**DE-A- 3 417 942** **US-A- 4 447 583**
**US-A- 4 472 488** **US-A- 4 502 934**

**Patent Abstract of JP 61-123637, (TEIJIN K K) 11 June 1986**

(73) Proprietor: **NESTE OY**
**Keilaniemi**
**SF-02150 Espoo 15(FI)**

(72) Inventor: **ÖSTERHOLM, Jan-Erik**
**Kurjentie 5 E**
**SF-06100 Porvoo(FI)**
Inventor: **KARJALAINEN, Sari**
**Suolaketie 3 A 459**
**SF-06400 Porvoo(FI)**
Inventor: **MONONEN, Pirjo**
**Suolaketie 1 A 26**
**SF-06400 Porvoo(FI)**

(74) Representative: **Ruffles, Graham Keith et al**
**MARKS & CLERK**
**57-60 Lincoln's Inn Fields**
**London WC2A 3LS (GB)**

**EP 0 231 309 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

"Chemical Abstracts, Vol 104 (1986), abstract No 235120, Wuli Huaxue Xuebao1986, 2 (1), 59-62, (Ch)"

Yon Cao et al., Makromol. Chem., 185 (1984) 389

Tourillon G. et al., J. Electrochem. Soc., 130 (1982) 2042

## Description

The present invention concerns a procedure for manufacturing an electrically conductive polythiophene polymer.

Electrically active, or electrically conductive, polymers can be produced from organic polymers having long chains of conjugated double bonds. The pi electrons in these double bonds can be "disturbed" by adding to the polymer certain doping agents which are either electron recipients or donors. Hereby vacancies, or extra electrons, are established in the polymer chain which enable electric current to proceed along the conjugated chain. The electrical conductivity of the polymers can be regulated, in dependence of the doping agent content, so as to span virtually the entire conductivity range from insulators to metals. Electrically conductive polymers of this kind have numerous interesting practical applications, such as in the manufacturing of light-weight batteries and storage batteries for instance.

There are numerous patent and other publications concerning electrically conducting polymers and methods for rendering them into the conductive state by doping with various dopants. Among these publications EP 195 380 can be mentioned, in which electrically conductive foam plastics can be manufactured by filling the pores of an open-celled foam plastic with monomers and an oxidant agent, after which the monomer is polymerized thereby forming an electrically conducting foam plastic. Even if there are mentions in this publication of many conductive polymers such as polypyrrole, polyaniline, polyacetylene and poly(2- or 3-methylthiophene) and as oxidants or dopants almost all known doping agents, only polypyrrole, polyacetylene and polyaniline have been used in the examples.

In US patent 4,447,583 a method for increasing the electrochemical conductivity of polyacetylene by partial oxidation (doping) with a compound of trivalent iron or cobalt is disclosed.

In US patent 4,472,488 it is disclosed that pyrrole, azulene, furane, aniline or thiophene can be electrochemically polymerized to coat a polyacetylene film by using $LiClO_4$ as conducting salt in order to manufacture a composite electrode for secondary batteries.

In EP 131 189 it is disclosed that, in general, electrically conductive polymers can be obtained by reacting aromatic compounds containing 2-9 carbocyclic rings and optionally possibly 2-9 heterocyclic rings with 0, S, or N as heteroatom, with sulphur and by oxidation the high-molecular compounds obtained with known oxidative agents.

Further examples from the prior art concerning polythiophene, are the articles of Yong Cao et al., Makromol. Chem., 185 (1984) 389 and Tourillon G. et al., J. Electrochem. SOC., 130 (1982) 2042. The former article concerns the doping of polythiophene with iodine and the latter concerns the stability properties of various conducting polymers and especially polythiophene doped with $CF_3SO_3^-$ .

Only the last-mentioned reference of Tourillon G. et al. deals with stability problems of conductive polymers. Concerning polythiophene it is stated that polythiophene is stable both in doped and undoped condition, which according to the invention has been found incorrect.

Polythiophene is one of those polymers which can be made electrically active in the manner just described. Polythiophene can be produced e.g. by using Ziegler-type catalysts and acid initiators. Another way to produce polythiophene, known in the art, has been disclosed e.g. in the EP Patents No. 95973 and 96612, and in the article: Kaneto et al., Japanese Journal of Applied Physics, vol. 22, 1983, p. L567-568. According to the references, electrically active polythiophene film is manufactured by electrolytically polymerizing thiophene by an anodic oxidizing reaction in a cell wherein the electrolyte solution contains thiophene and an electrolyte salt conforming to the form MX, where M is an alkali metal, usually Li, or equally

$(C_4H_9)_4N^+$ or $(C_2H_5)_4N^+$, and X is

$BF_4$,$ClO_4$, $PF_6$, $AsF_6$ or $CF_3SO_3$. Both polymerisation of thiophene and its doping will then take place simultaneously. The electrical conductivity of the film is in the range of 0.1 to 100 $Scm^{-1}$, depending on the doping ion. It is possible, if desired, to remove doping ions from the films by electro-chemical or chemical reduction, whereby electrically non-conductive polythiophene film is obtained. The conductivity of the reduced film is less than $10^{-8}$ $Scm^{-1}$.

The usefulness of electrically active polymers depends, among other things on their stability characteristics. Polythiophene in reduced pure form is highly stable under various conditions, e.g. in air, humidity, vacuum and high temperatures. In contrast, the stability of electrically active polythiophene under different conditions is dependent on the doping ion that has been used. The polythiophene complexes announced in the references cited above are more or less unstable and, therefore, questionable in many applications. For instance, polythiophenes doped with $BF_4$, $AsF_6$ and $PF_6$ are exceedingly sensitive to humidity. Polythiophene doped with $ClO_4$ presents good stability in air at normal temperature, but poor stability characteristics at elevated temperatures, and in addition the dry complex is prone to be explosive.

Some of the doping agents, again, command such high price that their use is not economical.

According to the invention, there is provided a process for manufacturing electrically conductive polythiophene or substituted polythiophene of the formula:

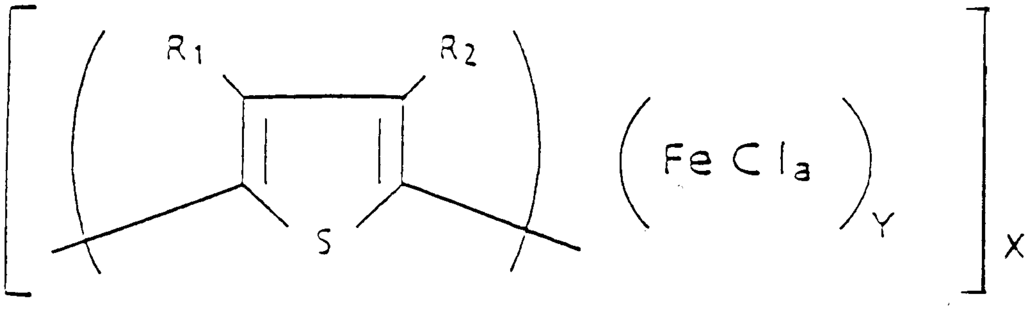

(I)

(in which $R^1$ and $R^2$ are both hydrogen atoms or one or both of them are an inorganic substituent selected from Br, Cl, I, F, OH, or CN, or an organic substituent selected from $-CH_2,CN$, $-OCH_3$, $-C_2H_5$, $-CH_3$ or $-C_6H_5$; a = 4; Y = 0.0001-0.50; and X>4)

characterised in that a polythiophene or substituted polythiophene is treated with $FeCl_3$ or with a compound containing $FeCl_4$ anions.

The stoichiometric composition of the polythiophene prepared in accordance with the invention conforms to the formula $[(C_4H_2S)(FeCl_a)_Y]_X$, where a is in the interval of 3-5, Y is in the interval of 0.0001-0.50 and X is greater than 4.

The electrically conductive polythiophene of the invention is usable as an electrically conductive film either as such as combined with another material. Thus, the film may be either as such as combined with another material. Thus, the film may be laminated to or applied as a coating on the surface of substrates consisting of other materials, such as plastics or metals, or between them. The polythiophene of the invention may equally be used in the shape of electrically conductive granules or powder, depending on the practical application.

In the procedure of the invention, polythiophene or substituted polythiophene manufactured in any appropriate way is doped or treated with $FeCl_3$ or a substance containing $FeCl_4$ anions. Thus it is possible for manufacturing the starting material to use for instance the above-mentioned procedures for manufacturing pure polythiophene. Then, in the above formula (I) either one or both of the substituents $R_1$ and $R_2$ may be either an inorganic substituent such as Br, Cl, I, F, OH or CN or an organic substituent such as $CH_2CN$, $OCH_3$, $CH_3$, $C_2H_5$, or $C_6H_5$. Highly suitable polythiophenes are those in which the substituent is the $CH_3$ group, such as poly(3-methylthiophene) and poly(3,4-dimethylthiophene). It is also possible to use polythiophene that has been doped e.g. in other ways known in themselves in the art, if hereby desired effects are achieved.

The doping of polythiophene or substituted polythiophene with $FeCl_3$ or with substances containing $FeCl_4$ anions may take place in various ways. One of the possibilities is to treat polythiophene with a fluid which contains $FeCl_3$ or compounds containing $FeCl_4$ anions. Said compounds may for instance be alkali salts such as $LiFeCl_4$ or nitrosyl salts such as $NOFeCl_4$. The fluid may be a suitable organic solvent, e.g. nitromethane, or any other solvent or suspension fluid which does not affect the doping process adversely. Usually, such organic solvents will be contemplated which dissolve the salt in question. For instance, aliphatic or aromatic hydrocarbons are appropriate.

The film obtained upon doping is washed clean of extra doping substance, using a suitable solvent, preferably the solvent that was used in the doping proper, and the film is dried.

It is possible by varying the doping agent content, the doping time and the temperature to regulate the electrical conductivity properties of the doped polythiophene.

The concentration of the doping agent my as a rule vary within $10^{-5}$ M to saturation. The doping process is more amenable to control when using dilute solutions. Doping can be carried out under atmospheric pressures or in over-pressure or vacuum. Doping in (partial) vacuum is well appropriate because in that case no high temperatures are required. The lower and upper temperature limits are normally determined by the freezing point and boiling point of the solvent. The doping time is selected, depending on reagents, temperature and desired end result, to be from a few seconds to a few days.

Polythiophene or substituted polythiophene according to the invention may also be manufactured by treating polythiophene film or powder with $FeCl_3$ vapour. This vapour treatment may be carried out under normal pressure or using elevated pressure or vacuum. Vacuum treatment is to be recommended because in that case the manufacturing can be carried out at lower temperatures.

A third procedure for manufacturing electrically conductive polythiophene according to the invention is to use polythiophene in the form of a film or of powder as working electrode in an electro-chemical cell in which the electrolyte solution contains an $FeCl_4$ salt in an organic solvent. The electrolyte solution may equally be a molten salt mix, for instance $FeCl_3$/BuPyCl or equivalent. When an electric current is passed through the cell, the polythiophene electrode is oxidized and the $FeCl_4$ anion present in the electrolyte is doped into the polymer film to achieve electric equilibrium.

The electrically active polythiophene of the invention has good stability properties in various conditions, as will be apparent from the accompanying examples, in which the polythiophenes of the invention, their manufacturing procedures and their properties are more closely described. In the examples, polythiophene was used which had been prepared as follows. Into a glass cell, in which had been placed a working electrode (a platinum foil) and a counter-electrode of aluminium, was added electrolyte solution having the composition: 0.5 M thiophene and 0.1 M $LiBF_4$ in a nitrobenzene/benzonitrile solvent. The electrolyte solution was hereafter carefully bubbled with argon gas for removal of oxygen. Polymerizing and doping the thiophene took place either galvanostically or potentiostatically by polarizing the working electrode with a voltage of at least 4.6 V with reference to the counter-electrode. Growth of electrically active, $BF_4$ anion-doped polythiophene commenced on the platinum electrode. Polymerising time was 30 minutes, and the current density of the working electrode was 2 mA/cm$^2$. Hereby a polythiophene-$BF_4$ film was obtained, which had thickness about 10 um. The electrically conductive film was immediately on polymerizing electro-chemically reduced by reversing the polarity of the electrodes and setting the current density of the counter-electrode at 1 mA/cm$^2$. The time of electro-chemical reduction was 15-30 minutes. The partly reduced film was then detached from the platinum electrode and immersed in methanol over night. After this methanol treatment, the film was washed with boiling methanol and chloroform. The washed polythiophene film was dried at 100 °C in dynamic vacuum over night. The result was a highly pure, $FB_4$-free insulating polythiophene film having C, H and S total content higher than 99 % and the stoichiometric composition:
$C_{4.0}H_{2.06}S_{1.08}$. Infra-red spectroscopy analyses revealed than the polythiophene that had bean obtained was poly(2,5-thiophene).

Example 1

A polythiophene film having conductivity less than $10^{-8}$ Scm$^{-1}$ and weight 2.28 mg was immersed in 0.1 M $FeCl_3$-nitromethane solution. The doping time was 30 minutes. After washing and drying, the weight of the film was 5.14 mg. This increase in weight corresponds to 23.5 mol% $FeCl_4$, that is, the complex that had been obtained was $[C_4H_2S(FeCl_4)_{0.235}]_x$. Elemental analyses of a sample yielded the stoichiometric composition: $[C_4H_2S(FeCl_{4.2})_{0.216}]_x$. The conductivity of the film was measured by the four-point method, and it was 2.4 Scm$^{-1}$.

Example 2

A polythiophene film having weight 29.4 mg was immersed in 0.05 M $FeCl_3$-nitromethane solution. The doping time was 60 minutes. After washing and drying, the weight of the film was 47.6 mg, corresponding to $[C_4H_2S(FeCl_4)_{0.26}]_x$. The conductivity of the film was 18.6 Scm$^{-1}$.

Example 3

A polythiophene film having the weight 15.01 mg was immersed in 0.005 M $FeCl_3$-nitromethane solution. The doping time was 5 minutes. After washing and drying, the weight of the film was 15.26 mg, and its conductivity was 3.7 x $10^{-3}$ Scm$^{-1}$. The composition of the film was determined and found to be $[C_4H_2S(FeCl_4)_{0.006}]_x$.

Example 4

Polythiophene films were doped as in Examples 1-3 with $FeCl_3$, using various $FeCl_3$ contents. The electrical conductivity of the film thus obtained was measured by the four-point method. In Fig. 1 are shown

the electrical conductivities of the films, with varying doping agent content Y. The figure reveals the steep ascent of electrical conductivity at very doping agent contents and its slower increase at higher contents,where the conductivity is also higher.

Example 5

A polythiophene film having conductivity less than $10^{-8}$ $Scm^{-1}$ was affixed to four platinum electrodes in a glass reactor. The reactor was evacuated and $FeCl_3$ vapour was evaporated over the film. During doping, the conductivity of the film was measured, its value increasing within a few minutes up to $10^{-2}$ $Scm^{-1}$. After 24-hour doping the conductivity of the film was 8.6 $Scm^{-1}$.

Example 6

A polythiophene film was attached to a platinum electrode and the electrode immersed in an electrochemical glass cell in which an aluminium foil served as counter-electrode. The polythiophene electrode was polarized with +4.2 V voltage with reference to the counter-electrode. After one hour's potentiostatic reaction the film was washed and dried. The conductivity of the film was 24 $Scm^{-1}$.

Example 7

A poly(3-methylthiophene) film having conductivity less than $10^{-8}$ $Scm^{-1}$ and weight 4.09 mg was immersed in 0.05 M $FeCl_3$ solution. Doping time was 30 minutes. After washing and drying the weight was 6.25 mg and conductivity 56.1 $Scm^{-1}$. The composition of the film was determined and found to be $[C_5H_4S(FeCl_4)_{0.26}]_x$.

In the examples following next, that stability properties of polythiophene-$FeCl_4$ films in different conditions were determined. The initial conductivity of these films at room temperature was between 1 and 20 $Scm^{-1}$.

Example 8

A polythiophene-$FeCl_4$ film having conductivity 10 $Scm^{-1}$ was affixed to four platinum electrodes. The conductivity of the film was continuously observed. The film kept 4 months in a laboratory atmosphere had conductivity 7.6 $Scm^{-1}$. In Fig. 2 is plotted the change of electrical conductivity as a function of time, as well as the conductivity of equivalent, $SI0_4$- and $BF_4$-doped films. The conductivity has been plotted in terms of relative conductivity, meaning the ratio of the absolute conductivity measured and the conductivity at room temperature at the start of experiment. The polythiophene film doped with $BF_4$ has clearly poorer stability characteristics than the film of the invention.

Example 9

A polythiophene-$FeCl_4$ film having conductivity at room temperature 1.6 $Scm^{-1}$ was attached to four platinum electrodes in a glass reactor. The reactor was continuously evacuated and its temperature maintained at 100°C. The reactor was kept under dynamic vacuum for 24 hours, during which time the conductivity of the film increased and levelled out at 3.5 $Scm^{-1}$. When the specimen had bean cooled to room temperature, its conductivity was 2.3 $Scm^{-1}$. The experiment was repeated so that the film was kept at 150°C in dynamic vacuum for 24 hours. Fig. 3 shows the (relative) behaviour of the conductivity of $[C_4H_2S(FeCl_4)_{0.3}]_X$ films at elevated temperatures in dynamic vacuum.

Example 10

A polythiophene-$ClO_4$ film having conductivity at room temperature 2 $Scm^{-1}$ was attached to four platinum electrodes in a glass reactor. The reactor was continuously evacuated. The conductivity of the polythiophene-$ClO_4$ film was observed while the film was kept at elevated temperature in dynamic vacuum. Fig. 4 reveals the poor characteristics of this complex at higher temperatures.

Example 11

A polythiophene-$FeCl_4$ film having conductivity at room temperature 10 $Scm^{-1}$ was attached to four platinum wires in a glass reactor. The reactor temperature was raised to 150 ° C. Pure, dry oxygen was blown past the film for 24 hours. The conductivity of the film remained almost unchanged, i.e., its conductivity after 24-hour oxygen treatment was 9.6 $Scm^{-1}$ at room temperature.

Example 12

A polythiophene-$FeCl_4$ film having conductivity at room temperature 4.3 $Scm^{-1}$ was attached to four platinum wires in a glass reactor. The reactor was kept at room temperature. The film in the reactor was flushed with $H_2O$-saturated oxygen for 24 hours. The conductivity of the film hereby went down to 0.74 $Scm^{-1}$. The film was then dried at 100 ° C for 24 hours, whereafter the film was cooled to room temperature. Its conductivity had gone up to 1.2 $Scm^{-1}$.

Example 13

A polythiophene-$BF_4$ film having conductivity at room temperature 20 $Scm^{-1}$ was kept in laboratory atmosphere at different humidities. Fig. 5 reveals the poor resistance of the film to humidity.

**Claims**

1. A process for manufacturing electrically conductive polythiophene or substituted polythiophene of the formula:

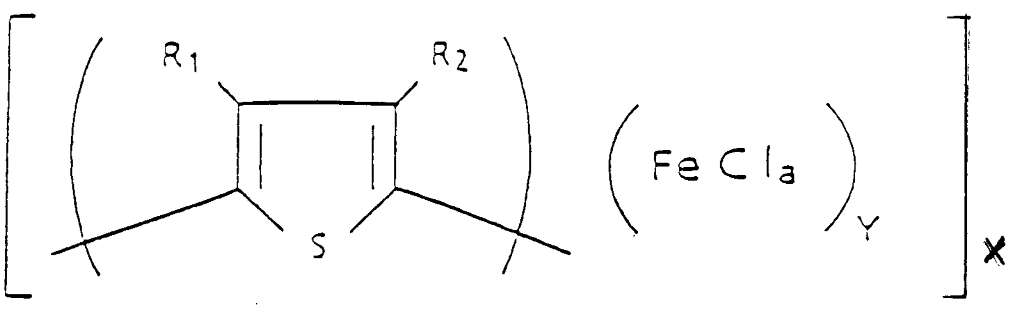

(I)

(in which $R^1$ and $R^2$ are both hydrogen atoms or one or both of them are an inorganic substituent selected from Br, Cl, I, F, OH or CN, or an organic substituent selected from $-CH_2$,CN, $-OCH_3$, $-C_2H_5$, $-CH_3$ or $-C_6H_5$; $\underline{a}$ = 4; Y = 0.0001-0.50; and X > 4)
characterised in that a polythiophene or substituted polythiophene is treated with $FeCl_3$ or with a compound containing $FeCl_4$ anions.

2. A process according to claim 1, characterised in that the polythiophene or substituted polythiophene is treated with a fluid containing $FeCl_3$ or salts containing $FeCl_4$ anions.

3. A process according to claim 1 characterized in that $FeCl_3$ is evaporated onto the polythiophene or substituted polythiophene which is in film or powder form.

**Patentansprüche**

1. Verfahren zur Herstellung elektrisch leitenden Polythiophens oder substituierten Polythiophens der Formel:

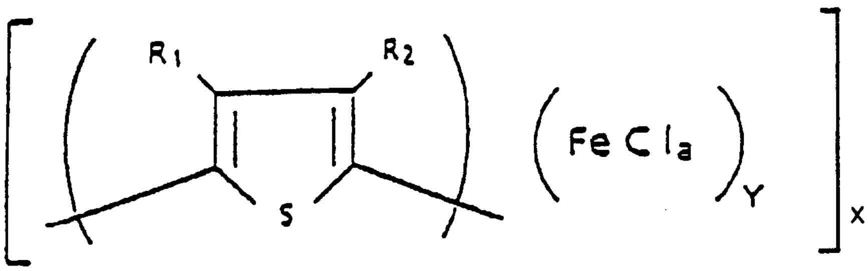

(I)

(worin $R^1$ und $R^2$ beide Wasserstoffatome sind oder eines oder beide davon einen aus der Gruppe Br, Cl, I, F, OH oder CN ausgewählten anorganischen Substituenten oder einen aus der Gruppe $-CH_2CN$, $-OCH_3$, $-C_2H_5$, $-CH_3$ oder $-C_6H_5$ ausgewählten organischen Substituenten darstellen; a = 4; Y = 0,0001-0,50; und X > 4),
dadurch gekennzeichnet, daß ein Polythiophen oder substituiertes Polythiophen mit $FeCl_3$ oder mit einer $FeCl_4$-Anionen enthaltenden Verbindung behandelt wird.

2. Verfahren gemäß Anspruch 1, dadurch gekennzeichnet, daß das Polythiophen oder substituiertes Polythiophen mit einer $FeCl_3$ oder $FeCl_4$-Anionen enthaltende Salze enthaltenden Flüssigkeit behandelt wird.

3. Verfahren gemäß Anspruch 1, dadurch gekennzeichnet, daß $FeCl_3$ auf das als Folie oder Pulver vorliegende Polythiophen oder substituierte Polythiophen aufgedampft wird.

## Revendications

1. Un procédé pour la production d'un polythiophène ou d'un polythiophène substitué, conducteurs de l'électricité de formule :

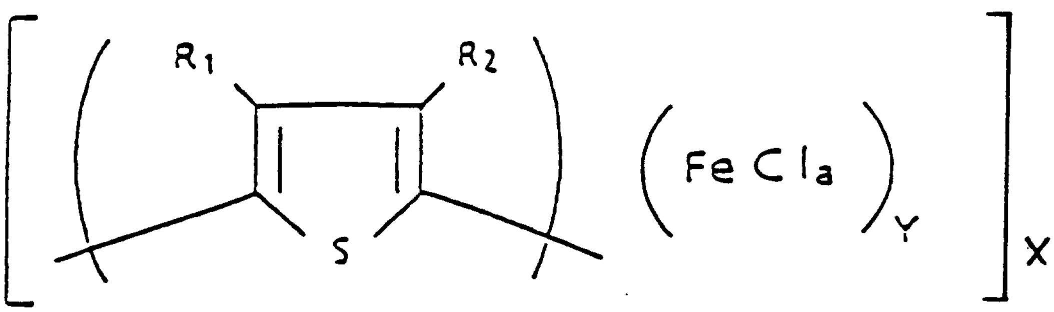

(I)

(dans laquelle $R^1$ et $R^2$ sont tous deux des atomes d'hydrogène ou un ou deux d'entre eux sont un substituant minéral choisi parmi Br, Cl, I, F, OH ou CN, ou un substituant organique choisi parmi $-CH_2CN$, $-OCH_3$, $-C_2H_5$, $-CH_3$ ou $-C_6H_5$ ; a = 4 ; Y = 0,0001-0,50 ; et X > 4)
caractérisé en ce que l'on traite un polythiophène ou un polythiophène substitué, avec $FeCl_3$ ou avec un composé contenant des anions $FeCl_4$.

2. Un procédé selon la revendication 1, caractérisé en ce que le polythiophène, ou le polythiophène substitué, est traité avec un fluide contenant $FeCl_3$ ou des sels contenant des anions $FeCl_4$.

3. Un procédé selon la revendication 1, caractérisé en ce que l'on évapore du $FeCl_3$ sur le polythiophène, ou sur le polythiophène substitué, qui est sous forme d'un film ou d'une poudre.

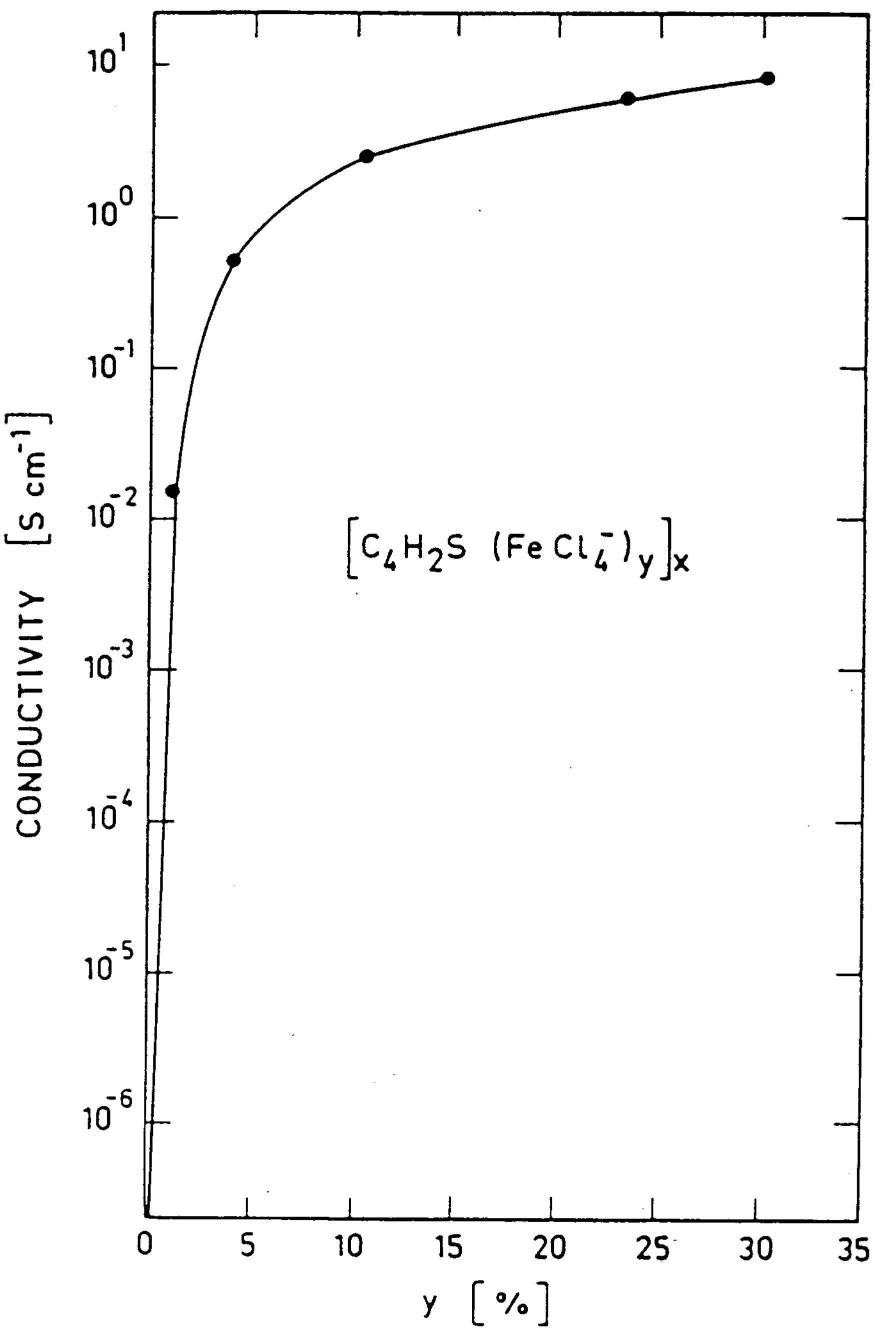
CONDUCTIVITY [S cm$^{-1}$]
$10^{1}$
$10^{0}$
$10^{-1}$
$10^{-2}$
$10^{-3}$
$10^{-4}$
$10^{-5}$
$10^{-6}$
$[C_4H_2S\ (FeCl_4^-)_y]_x$
0
5
10
15
20
25
30
35
y [%]

FIG. 1

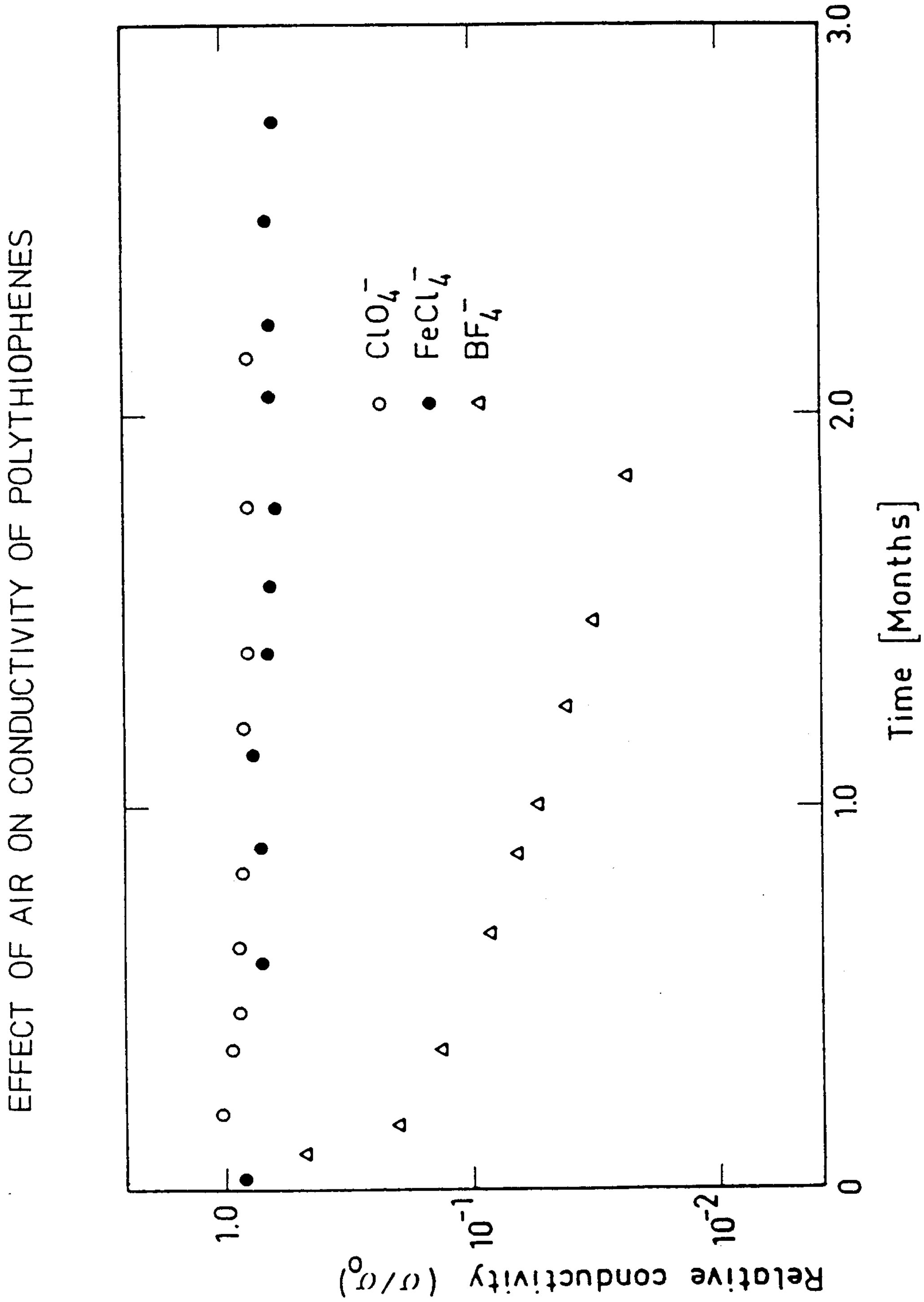
EFFECT OF AIR ON CONDUCTIVITY OF POLYTHIOPHENES
$ClO_4^-$
$FeCl_4^-$
$BF_4^-$
Relative conductivity ($\sigma/\sigma_0$)
1.0
$10^{-1}$
$10^{-2}$
0
1.0
2.0
3.0
Time [Months]

FIG. 2

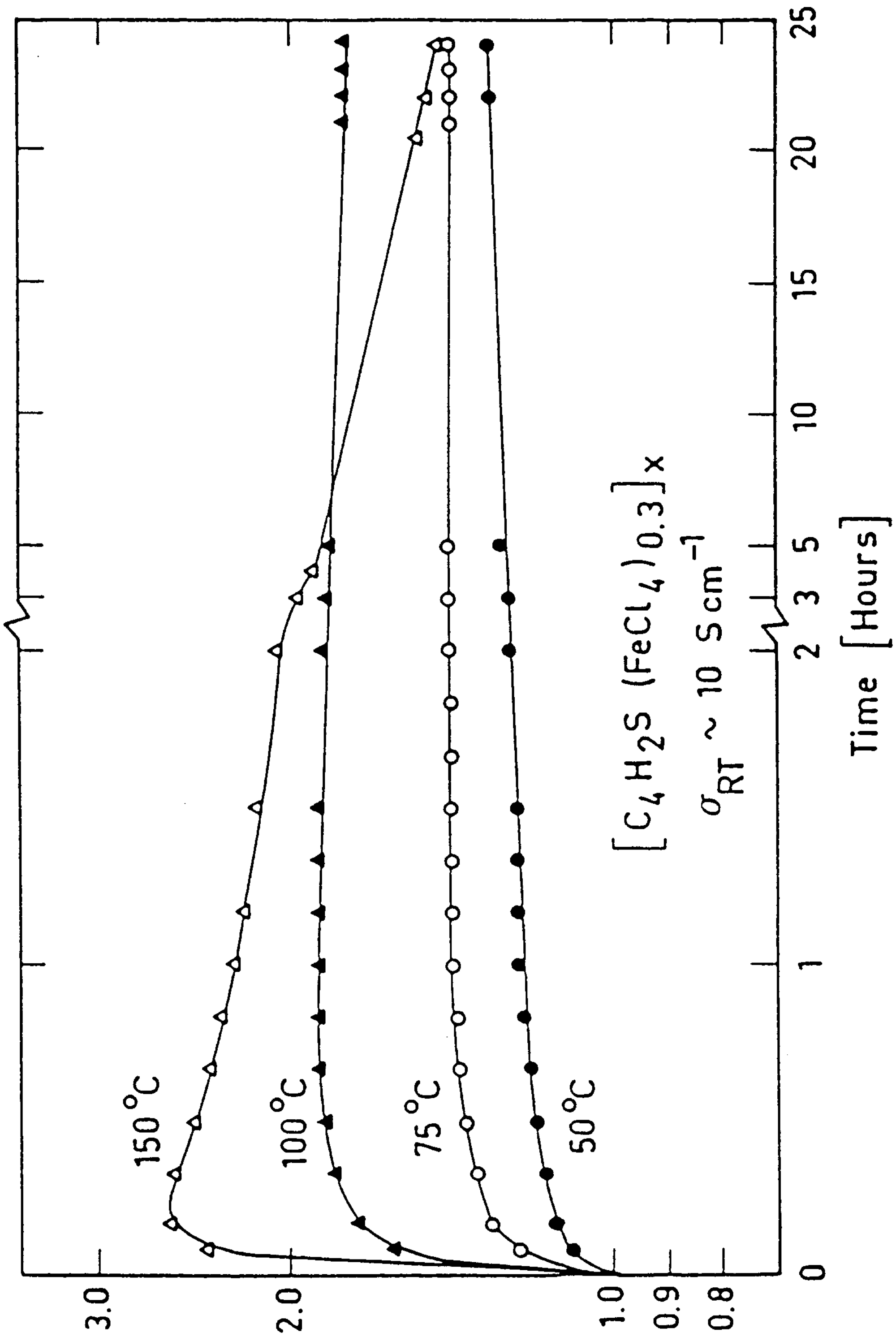
Relative conductivity ($\sigma/\sigma_0$)
3.0
2.0
1.0
0.9
0.8
0
1
2
3
5
10
15
20
25
150°C
100°C
75°C
50°C
$[C_4H_2S\ (FeCl_4)_{0.3}]_x$
$\sigma_{RT} \sim 10\ S\ cm^{-1}$
Time [Hours]

FIG. 3

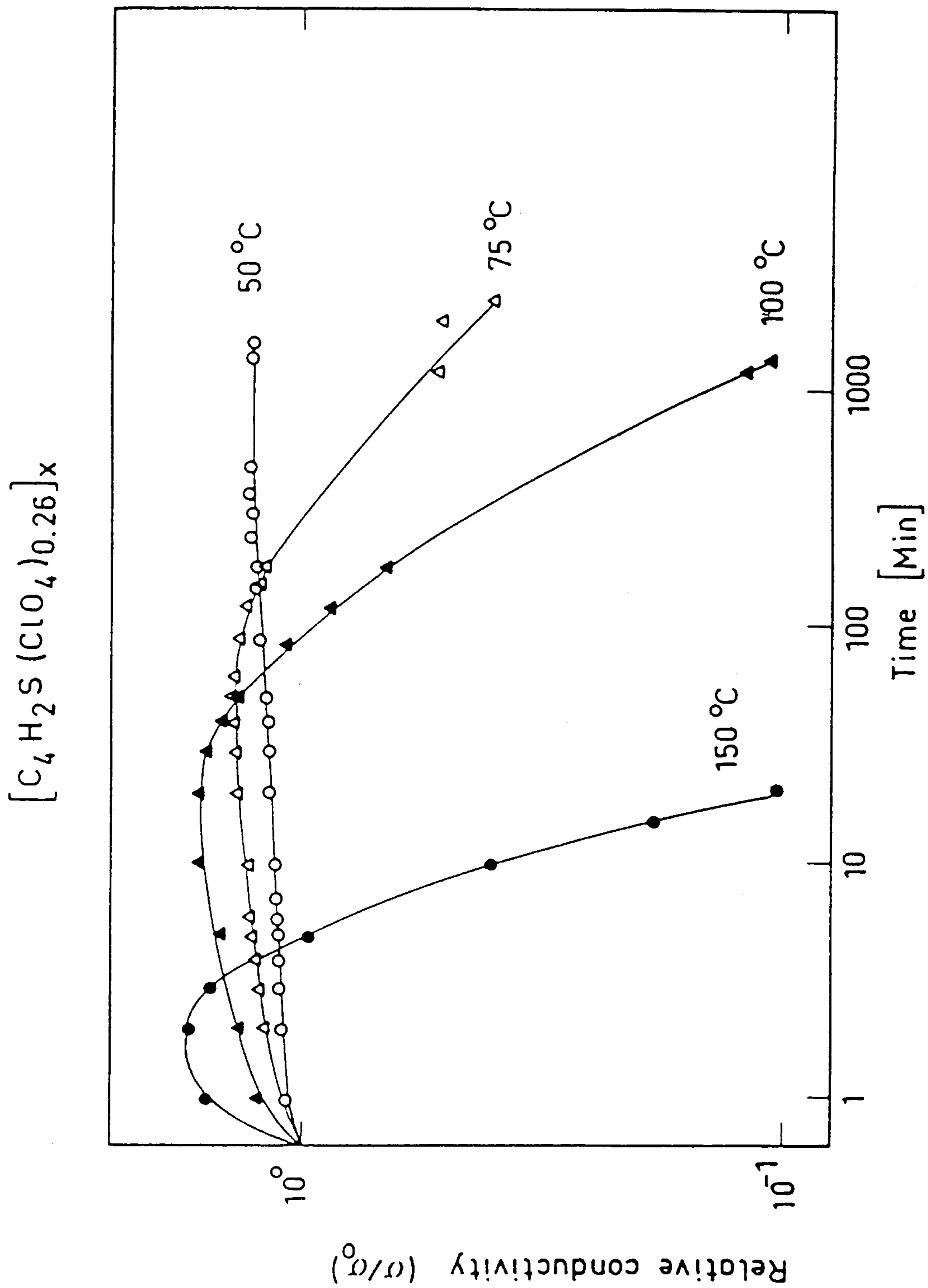

$[C_4H_2S(ClO_4)_{0.26}]_x$
50 °C
75 °C
100 °C
150 °C
1
10
100
1000
Time [Min]
$10^0$
$10^{-1}$
Relative conductivity $(\sigma/\sigma_0)$


FIG. 4

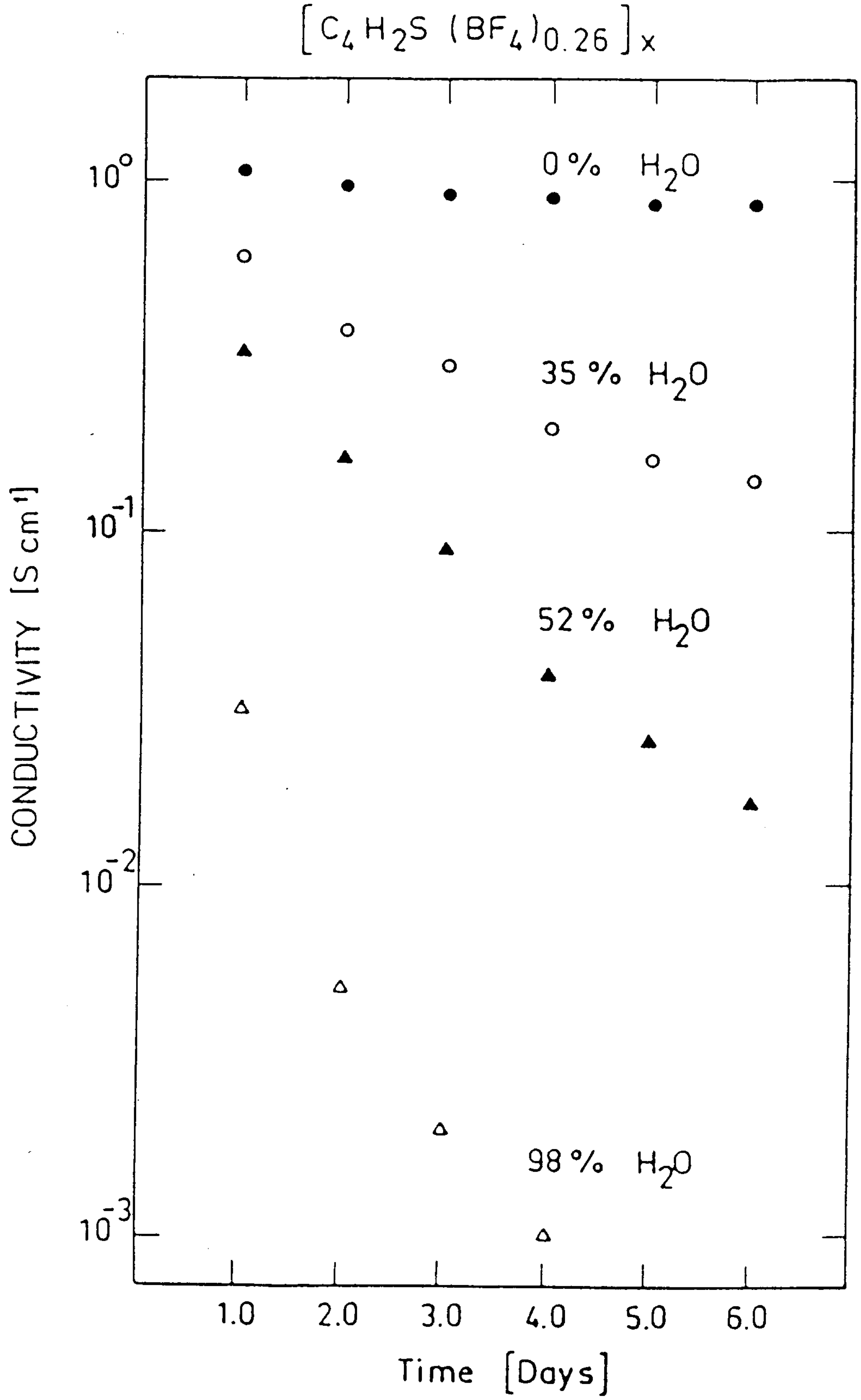
[C4H2S (BF4)0.26]x
10^0
10^-1
10^-2
10^-3
CONDUCTIVITY [S cm-1]
0 % H2O
35 % H2O
52 % H2O
98 % H2O
1.0
2.0
3.0
4.0
5.0
6.0
Time [Days]

FIG. 5